# EUROPEAN PATENT SPECIFICATION

(11) **EP 1 121 241 B1**
(45) Date of publication and mention of the grant of the patent: **17.09.2003**
(21) Application number: 99948730.9
(22) Date of filing: 15.10.1999
(51) Int. Cl.: B29C 65/02

(54) **A WELDING STRING FOR FORMING TRANSVERSE WELDING SEAMS IN A SHEET OF FILM**
SCHWEISSSTRANG ZUM HERSTELLEN VON QUERSCHWEISSNÄHTEN IN EINEM FOLIENBLATT
TIGE DE SOUDAGE PERMETTANT DE FORMER DES JOINTS DE SOUDURE TRANSVERSAUX DANS UNE FEUILLE DE FILM

(30) Priority: 16.10.1998 DK 132498
(43) Date of publication of application: 08.08.2001
(73) Proprietor: Roll-O-Matic A/S, 5000 Odense C. (DK)
(72) Inventor: BUK JENSEN, John, DK-5230 Odense M. (DK); RASMUSSEN, Jens, Peder, DK-5230 Odense M. (DK)
(74) Representative: Sundien, Thomas
(86) International application number: DK9900561
(87) International publication number: WO00026010

(56) References cited:
- DE-C1- 3 205 755
- DE-C2- 2 143 512

## Description

The invention relates to a welding string for forming transverse welding seams in a sheet of film that comprises at least one layer of film according to the preamble of claim 1.

Such welding strings are known and used eg, in the manufacture of plastics bags from films wherein the transverse welding on the film forms the bottom and handle portions of the bags or the sides of the bags. Today, very high demands are made to production velocities, and it is the welding operation itself that constitutes the most substantial limitation to the accomplishment of increased production velocities.

In the prior art plants for the manufacture of bags that work with sheet velocities of about 100 m per minute, the welding strings are configured either with mounted resistor wires for the heating or with metal beams provided with through-going holes for heater cartridges.

In case resistance wires are used, they are typically arranged exteriorly of a flexible rubber or plastics list extending along the welding string, a Teflon cloth being attached around the resistance wires, partly to prevent the heated film from sticking to the resistance wires or the rubber list, and partly to contribute to securing the resistance wires. It is a problem in connection with this construction that in case of elevated film velocities and consequently high accelerations for the welding string, the Teflon cloth can be torn to pieces or the wire be shifted behind the cloth. The former leads directly to production halts and subsequent repair of the welding string, and the latter leads to weldings of poor quality or weldings that are misplaced relative to a subsequently produced perforation line.

Further devices for welding seams in a sheet of film are known from e.g. DE-C-3 205 755 or DE-A-2 143 512.

When metal beams are used, eg aluminium beams, it is necessary with large material thicknesses in order to counter flexing due to the heating, and these beams not having indigenous flexibility, as opposed to the flexible rubber or plastics lists, they must be processed with a high degree of accuracy to provide an even abutment force across the entire film. It has hence been necessary to carry out the final finishing in heated and mounted state in order to accomplish the requisite tolerances. Mounting and adjustment of these beams are very time-intensive operations, which means that eg shifts from one production to another result in protracted operation halts.

It is the object of the invention to provide a welding string that does not involve the above-mentioned drawbacks and allows sheet velocities that are considerably elevated compared to the prior art.

This is obtained with a welding string as defined in claim 1.

Particular embodiments of the invention are the subject of the dependent claims.

The use of a thin-walled metal profile for the welding body means that deformations will occur due to heating of the profile, and the profile itself will not be able to resist the very powerful accelerations to which it is subjected at onset and stop between each welding cycle. However, by supporting this profile with a rigid carrier beam as stated, and transmitting the movement from the movement means via this beam to the welding body, the welding body itself does not have to carry the very large mass forces. Accomplishment of an even abutment pressure is enabled by the particular support of the welding body relative to the carrier beam, where the spring force of the spring elements urge the bodies towards the film, and the adjustable securing elements retain the bodies against the impact of the spring force. Hereby the bodies become self-aligning, since they yield resiliently upon mutual abutment against each other from each their film face. It is possible to configure the heater element such that it constitutes in itself the welding body whereby body and heater element constitute a combined element.

By this construction, it has surprisingly been found that it is possible to configure the welding body as an extruded profile of light metal, preferably an aluminium profile as featured in claim 2.

The carrier beam and the welding body are conveniently configured as featured in claim 3. According to this claim, the carrier beam comprises a flexurally rigid U-profile with a bottom and two legs, and the welding body comprises both an abutment face that faces away from the film, and lateral faces, and the welding body is situated between the two legs of the U-profile, and in such a manner that the spring elements in the form of pressure springs cooperate with the securing elements to act between the abutment surface on the welding body that faces away from the film and the U-profile bottom. This configuration of the string enables reliable securing of the welding body in the U-profile. However, the profile of the carrier beam can be configured in other ways as long as it has a well-defined abutment face parallel with the film, and a suitably high degree of flexural rigidity in the plane perpendicular to the film face. The U-profile should be dimensioned to accomplish the requisite rigidity, and in that case it can be found to be expedient to reinforce the U-profile with a further profile, eg a further U-profile.

It has been found that it is possible to eliminate the Teflon cloth and thus to accomplish a more simple and reliable construction by configuring the side of body that faces towards the film with a bead having a plane top face, as featured in claim 4, wherein there has been established a Teflon coating, at least on the plane top face. Of course this construction does not preclude the use of a Teflon cloth.

As featured in claim 5, the welding string is conveniently configured such that the pressure springs comprise a silicon block arranged at the bottom of the U-profile and a support portion secured against the silicon block and having an abutment face, wherein the abutment face of the welding body that faces away from the film rests against the abutment face of the support part, and the adjustable securing elements comprise bolt and/or screw connections at the rim portions of the U-profile between the bottom of the U-profile and the lateral faces of the welding body.

This embodiment enables tipping of the welding body relative to the U-profile by adjustment of the bolt and/or screw connections. These connections also serve to tighten the welding body down towards the silicon block for resilient compression thereof. It can facilitate the tipping movement if the abutment face of the support portion has a shape that is convex in the transverse direction of the welding string.

According to claim 6, safety blocks can be arranged between the legs of the U-profile and the lateral faces of the welding body, which safety blocks rest against a flange that extends along the abutment face of the welding body, wherein the safety blocks have interiorly threaded holes in the transverse direction of the U-profile, opposite which holes the legs of the U-profile are provided with corresponding holes in which screws are secured for fastening the safety blocks at a given height relative to the U-profile bottom. Hereby it is possible to secure the welding body in a given adjusted position relative to the U-profile. This option is particularly important when a silicon block is used as spring element, and the tipping position and the tightening of the welding body down towards the silicon block has been effected. Obviously the holes in the U-profile must be somewhat larger than the threaded parts of the screws, however, not so large as to prevent the screw heads from abutting on the outside of the U-profile without passing through the holes. It is now possible to remove the bolts or screws used for the tipping adjustment after the safety blocks have been fastened to the insides of the legs of the U-profile, and thus by means of the protruding flange to secure the welding body in resilient abutment on the silicon block. The weight of the welding string is hereby reduced, and there is no risk that the screws that have been used for the adjustment work their own way out.

The configuration described in claim 7 wherein the pressure springs consist of screw or disc springs and wherein the adjustable pull elements comprise bolts that are solidly connected to the abutment face of the welding body that faces away from the film and which is conveyed through the profile, and wherein the bolts on the back of the profile have adjustment nuts that enable very easy access to adjusting the height of the welding body relative to the profile.

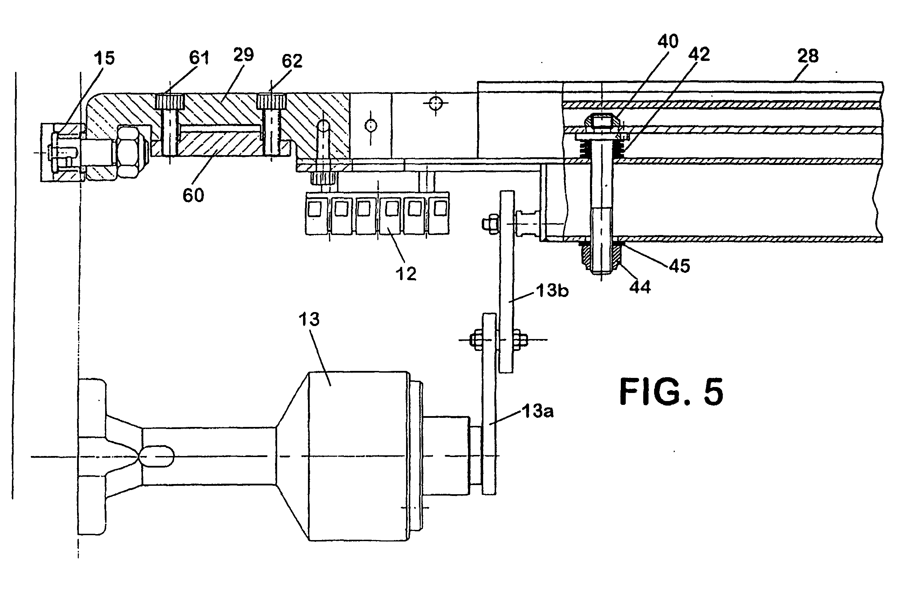

In a welding station the embodiment shown in Figures 5 and 6 is typically used at the one side of the sheets of film, and an embodiment according to claim 7 at the other side thereof. As stated, the configuration according to claim 7 enables extremely simple access to adjusting the height, and by the embodiment shown in Figures 5 and 6 both options of lateral adjustment and tipping of the welding body relative to the carrier beam are obtained. Hereby it is ensured that the welding bodies at each side of the film can readily be adjusted to meet accurately and have the same abutment force on each other along the entire welding.

For the welding of 'T-shirt' bags the part that is later to constitute the handle portion of a bag is welded simultaneously with the part that is to become the bottom portion of an adjacent bag whereby their two associated welding seams are caused to be positioned quite close to each other. Likewise, in case of laterally welded bags two closely neighbouring welding seams are usually welded simultaneously whereby the first side of one bag is manufactured simultaneously with the manufacture of the last side in the preceding bag. For simultaneous formation of two such welding seams, the welding body is conveniently configured in accordance with claim 8 whereby the welding body has two separate cavities for receiving heater elements, and wherein said bead is configured above each cavity. Of course, the welding body can be made with one, two or more beads as needed.

A convenient construction for conducting power and measurement signals to/from the heater element of the welding body will appear from claim 9, wherein an electrical wire connection is provided between a centrally arranged, closed pull ring device and the heater elements of the welding string through an articulation comprising a first articulated part connected to the pull ring device, and a second articulated part which is pivotally connected to the first articulated part and the carrier beam, respectively, to which articulation electrical wires are fastened. In case of prior art welding devices the supply of power has been effected via conducting plates arranged at each side, from which electrically conducting pull brushes fastened to the welding string have captured the electrical power. Owing to the thus open and accessible conducting plates, law has - for reasons of personal safety - laid down maximum values for the voltage to be used. In the closed pull ring device it is not possible to unintentionally touch conducting parts and hence it is possible to use voltages that are convenient for solving the relevant task without such particular regards to personal safety. Since the welding strings do not move circularly, it is necessary to employ a power connection between the pull ring device and the welding strings that can adapt to the varying distance there between. The articulation mentioned in the claim, to which the electrical wires are connected, is particularly effective therefor, since it prevents the wires from being freely suspended and thus risking interference with the remaining movable parts of the device.

As featured in claim 10, establishment of the connection between the carrier beam and the movement element in a plane that extends substantially through the centre of mass of the welding string, the torques are avoided that may cause the welding string to tear itself free of the movement element and cause unintentional oscillations in the system, and for further ensuring a stable and even welding operation there is - at least along that part of the curve where the welding is effected - also provided, as featured in claim 10, guide faces against which a curve follower that is in permanent connection with the welding string slides and/or rolls.

In the following the invention will be described in detail with reference to the figures, wherein
Figure 1 is a sectional view through a welding station comprising a welding string according to one example of the invention,
Figure 2 is a sectional view along line A-A in Figure 1,
Figure 3 is a cross sectional view through a welding string according to a first embodiment of the invention,
Figure 4 is a cross sectional view through a welding string according to an alternative embodiment of the invention,
Figure 5 is a longitudinal sectional view through a welding string according to the embodiments shown in Figure 3, and a longitudinal sectional view through the suspension part between the welding string and the toothed belt and the pull ring device and articulation between this and the welding string.

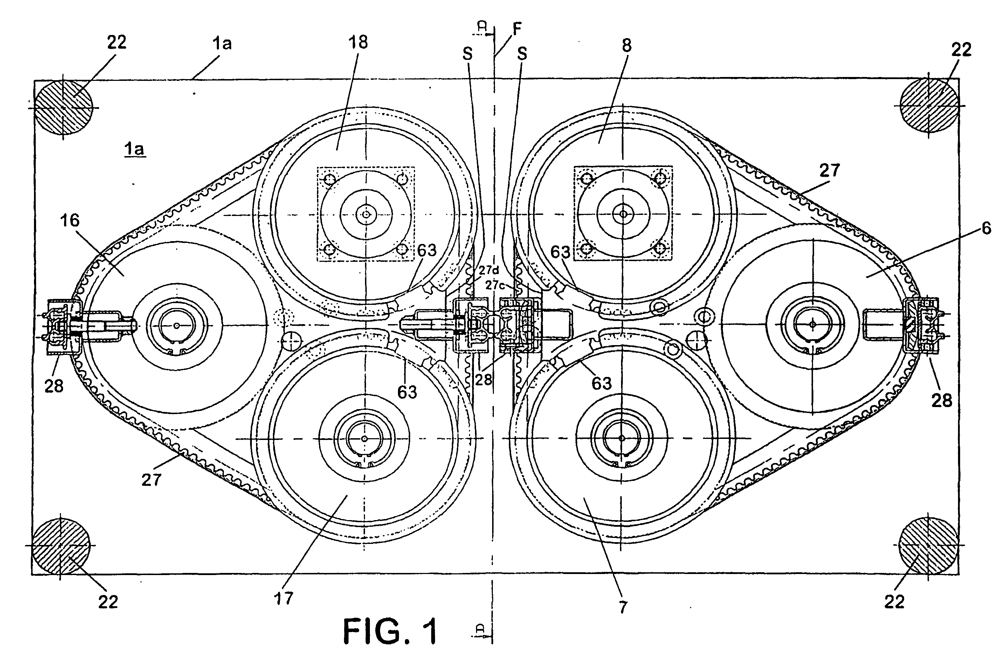

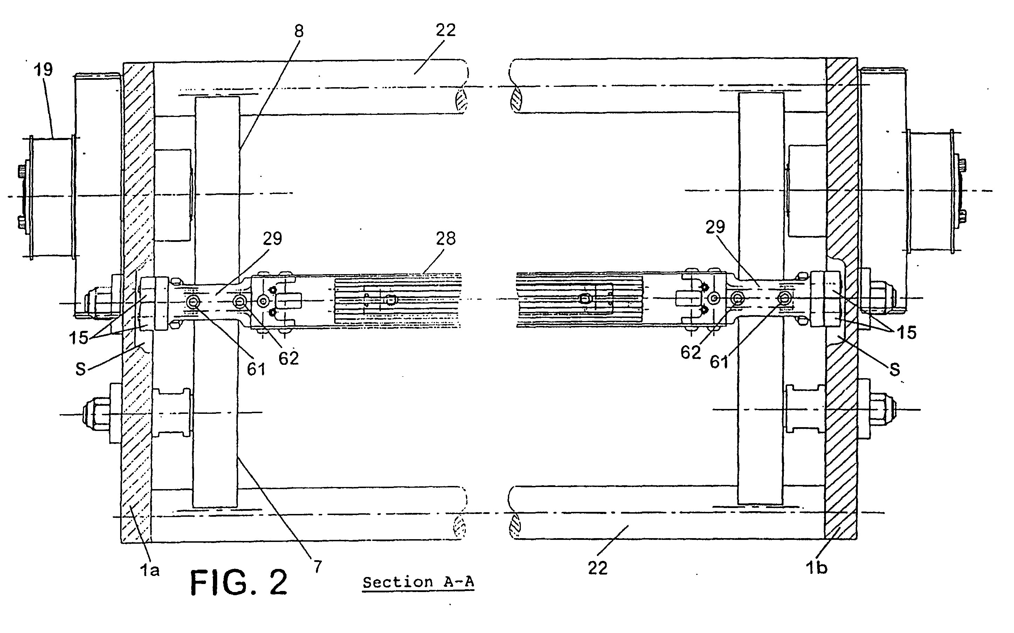

The welding station in Figures 1 and 2 comprises a mounting plate 1a and 1b at each side that are separated by a number of stays 22 that fixate the plates 1a and 1b relative to each other. From Figure 1 it will appear that on the inside of the mounting plate 1a, belt wheels 6,7,8 are arranged that form a triangle, and belt wheels 16,17,18 that form a corresponding, but relative thereto inversed triangle, wherein the triangles are arranged such that one of their sides faces towards the other. Toothed belts 27 have been conveyed around each of the three belt wheels whereby the toothed belt conveyed around each of the three belt wheels 6,7,8 form the sides of the first triangle, and the toothed belt around the belt wheels 16, 17 and 18 form the sides of the other triangle. In that case toothed belt stretches 27c extend parallel with toothed belt stretches 27d between wheels 17 and 18.

On the opposite internal face of the second carrier plate 1b corresponding belt wheels with toothed belts are embedded which are situated symmetrically opposed thereto. The sheets of film F that are to be joined by welding are conveyed between the two plates 1a and 1b in a plane that extends centrally between the two parallel extending toothed belt stretches 27c and 27d. The welding strings that are each as a whole designated by 28 are at each lateral plate 1a and 1b provided with each their toothed belt. For further controlling the course of the welding strings, in particular at the parallel toothed belt stretches 27c and 27d there are, in the mounting plates 1a,1b, formed grooves S in which curve rollers 15 are conveyed. The curve rollers 15 are connected to the welding strings 28 in extension of an extension part 29. Each welding string 28 has two curve rollers 15 at each side, and the rollers 15 are rotatable about their own axis, which means that they can roll in abutment on the one or the other side of the guide S.

On the outside of each mounting plate 1a and 1b there is a drive wheel 19 which can, via shaft connections through the mounting plates, synchronously drive the toothed belts on each side of the film. Hereby the welding strings 28 can be moved around along the triangular curve, and during passage of the toothed belt stretches 27c and 27d they will follow parallel with the sheets of film F at each side thereof. When controlling the drive velocity it is ensured that the welding strings 28 have the same velocity as the film sheets F along the toothed belt stretches 27c and 27d. The welding strings 28 are arranged such on the toothed belts that, simultaneously at each their side of the sheets of film F, they follow the two parallel extending toothed belt stretches 27c and 27d. By adapting the temperature of the abutment faces to the time during which the faces are pressed against the film sheets, joining by welding of the film sheets is accomplished between the abutment faces.

During operation, the sheets of film F are conveyed continuously and at high velocity through the welding unit, and when a welding is to be formed, the belt wheels of the welding unit is, via the drive wheels, set in rotation by one or more servomotors, and the toothed belts 27 are moved and convey a welding string 28 on each side of the film for abutment on each their film side and press the strings 28 towards each other. In case of very long bags the welding strings stand still when out of engagement. In case of lengths shorter than the synchronous-bag length (the bag length that corresponds to the toothed belt stretch between the two welding strings), the welding string is moved at velocities that exceed the film advancement rate when it is out of engagement, and in case of the synchronous-bag length it is moved at a constant rate, and in case of longer bags it is moved at a lower rate in order to finally stand still in case of the longest bags. When two belt wheels are used, changes in the velocities of the sheet, if any, must be accomplished from a position where the welding string is at the peak point of the belt wheel that leads into the film sheet and onwards to the point where the abutment on the film begins. By use of three belt wheels the rate changes can already be initiated along the straight section before the last belt wheel prior to the engagement, which results in a substantial reduction of the mass forces to which the welding strings are exposed.

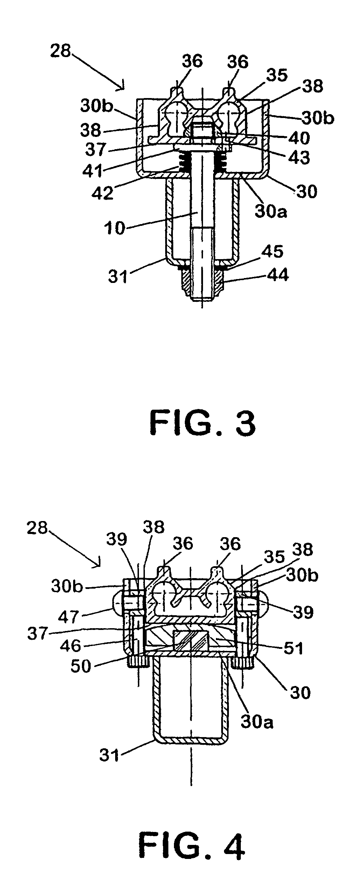

Two examples of the welding strings 28 are shown in Figures 3 and 4, and they have in common that the welding strings are constructed by use of two U-profiles 30,31 whose legs all face towards the film, and wherein the first U-profile 30 encloses the welding body 35 itself. The second U-profile 31 has been welded to the first U-profile at the bottom face thereof and its legs also face towards the film. The welding bodies 35 themselves are identically configured in the two examples, and here they are constituted by extruded aluminium profiles. The examples shown in Figures 3 and 4 are intended for welding of the so-called "T-shirt" bags wherein two welding seams are to be formed relatively close to each other and therefore the welding body 35 is configured with two abutment faces in the form of beads 36 having a flat top face that extends along the profile for forming the welding seams proper. The flat top face of the beads 36 is coated with Teflon to ensure that the heated film does not adhere thereto following welding where the bodies are moved away from the sheets of film that are now joined by welding.

At the side that faces away from the sheets of film, the welding body 35 has a plane abutment face 37 and two plane guide faces 38 perpendicular to the plane of the film. Interiorly below the two beads 36 the profile has two cavities that match the two heater cartridges (not shown in the figures) that are situated in the entire longitudinal expanse of the profile and which establish the temperature on the surface of the beads which is necessary for the welding procedure. The relatively thin-walled profile will be quite flexible, and the necessary welding pressure is established by means of the U-profiles 30,31 of the carrier beam. In the areas between the beads 36, the welding body 35 may, to counter deformations due to heating, be slotted with a longitudinal milling between the beads. It is configured such that the two body portions are coherent only in a few, eg two or three points, in the longitudinal direction of the body.

In the example shown in Figure 3, the welding body is secured to the U-profile bottom with bolts 10. In figure 3 and in Figure 5 a single bolt is shown that represents a number of such bolts along the entire U-profile of the carrier beam. At its top, the bolt 10 is fastened to the plane abutment surface 37 of the welding body. Thus the bolt 10 has been conveyed through a hole provided therein and on the top face of the abutment face 37 a nut 40 is screwed on that tightens the abutment face 37 down towards an abutment flange 41 which is coherent with the bolt 10. To ensure that rotation of the bolt 10 does not take place, there is - in a hole in the abutment flange 41 and a corresponding hole in the abutment face 37 - mounted a through-going pin 43. Between the abutment flange 41 and the bottom of the U-profile 30, disc springs 42 are arranged around the bolt 10 that are joined by tightening of a nut 44 as shown in Figures 3 and 5. The nut 44 is in abutment on the outside of the bottom of the second U-profile 31 via a tension disc 45.

This construction enables the welding body 35 to be tightly fastened against the U-profile 30 in a manner that allows the welding body 35 to yield to pressure forces that exceed the bias of the disc springs 42. Also, adjustment of the nut 44 makes it possible to change the height of the welding body 35 relative to the U-profile 30. By arranging such bolt assemblies sufficiently closely, the adjustment can ensure that the top faces of the beads 36 follow each other in parallel in a plane perpendicular to the film plane on the one side and the other side of the sheets of film, also in case the thin-walled profile of the welding body 35 is deformed when the profile is heated to the welding temperature. Hereby a uniform abutment pressure is ensured against the sheets of film across the entire abutment faces of the welding bodies.

An alternative attachment of the welding body 35 in the profile 30 is shown in Figure 4, wherein a block 50 of a rubber-elastic material, eg silicon rubber, has replaced the disc springs. The block 50 sits as an unbroken string or individually along the entire longitudinal direction of the welding body 35 at the bottom of the U-profile 30. Between the block 50 and the welding body 35, a support portion 51 is provided. In the transverse direction of the welding string, the support portion 51 has a surface with a convex shape, and herein it faces towards the abutment face 37 of the welding body. Now, the welding body 35 is able to tip from side to side on the convex surface, and for controlling this tipping movement and for biasing the silicon block with a certain bias, adjustable bolt connections 46 are provided between the U-profile 30 and the lateral faces 38 of the welding body (shown in Figure 4). The bolts 46 are arranged at rim portions at each side of the U-profile, and different tightening of the bolts 46 at each side makes the welding body 35 tip over the convex face of the support portion 51. The tipping movement can be accomplished without the convex face of the support portion, eg as a consequence of the flexibility of the block 50.

The bolts 46 are not tightened completely, since they are adjustment bolts, and consequently there is no risk that they drop out or change position during the movements of the welding strings 28. In order to avoid this, safety blocks 39 are provided in a space between the lateral faces 38 of the welding body 35 and the legs 30b of the U-profile 31, said blocks abutting on a flange that protrudes from an abutment face 37 on the welding body. Herein there are mounted safety screws 47 - in holes that have interior threads - through holes through the U-profile's legs 31.

When the height and tipping movement of the welding body 35 have been adjusted, the safety screws 47 are tightened from the outside of the U-profile, and now, when the outwardly protruding flange from the abutment face 37 will abut on the safety blocks, the welding body is unable to move towards the film, but it is still able to move against the spring force of the silicon block in a direction towards the bottom 31a of the U-profile 31. The adjustment screws can subsequently be removed.

Advantageously and as shown in Figure 4, the adjustment screws 46 can be allowed to pass through recesses in the outwardly protruding flange from the abutment face 37 of the welding body and into holes with internal threads in that face of the safety block that faces towards the flange, and in that connection eg the holes for the adjustment screws 46 and the holes for the safety screws 47 can be arranged in each their plane in the safety block in the longitudinal direction of the welding string. The holes in the legs 31b of the U-profile must be somewhat oversized compared to the safety screws 47, in particular in the direction perpendicular to the film, since the safety screws 47 must be able to follow the movements of the adjustment screws 46. The length of the safety blocks 39 can be varied but is typically comprised within the range of 2cm-5cm, and they will be evenly distributed across the entire entire longitudinal expanse of the welding string at both sides of the welding body 35.

In the examples described herein the welding body is configured for forming two weldings close to each other transversally of the film sheets, but it is also possible to employ the technique for forming individual weldings. Usually it will not be necessary with all of the described adjustment options for each welding string; it will be sufficient if eg the option of adjusting the height as shown in Figure 3 is established at the one side of the sheets of film, and the tipping adjustment option shown in Figure 4 is established at the other side.

The heater cartridges in the welding bodies 35 require supply of electrical power and since the welding bodies follow a non-circular arch and perform abrupt movements with very large accelerations, it is necessary to provide extraordinary measures for ensuring a stable power supply. Thus, Figure 5 shows a pull ring device 13 centrally located on the inside of one of the carrier plates 1a or 1b. Between the pull ring device 13 and the welding string 28 it is in the form of an articulation with two articulated parts 13a and 13b. At its one end the articulated part 13a is solidly connected to the rotatable part of the pull ring device 13, and at its other end it is rotatably connected to the one end of the articulated part 13b. The other end of the articulated part 13b is pivotally connected to the welding string 28. The wires necessary for the power supply and the temperature control and that are to connect the movable part of the pull ring device to the welding string are solidly anchored on the articulated part and are thus safely positioned even in case of high accelerations. The reference numeral 12 designates a usual tag-block element for establishing the electrical-wire connections.

The connection between the welding string 28 and the toothed belt 27 must be extremely strong and as shown in Figure 5, it consists of a yoke 60 that - by means of two screws 61,62 - tightens the toothed belt solidly against the suspension part 29 that is a direct extension of the welding string 28, and is solidly connected thereto. Of course, recesses 63 must be established in the toothed belt wheels, in which the yokes can rest. The yoke is preferably dimensioned such as to engage around two teeth in the toothed belt. The connection between the toothed belt and the welding string must be in a plane that should, to the highest degree possible, pass through the centre of mass of the string, which prevents that changes of velocity cause a twisting of the string around the longitudinal axis of the welding string due to imbalance. Exteriorly of this connection the curve follower is established on a further extension of the suspension part 29. In the figures, the curve follower is shown in the form of rollers that roll in a groove S in the assembly plates 1a,1b. Instead of rollers, glide blocks can be used, or a rail device can replace the groove.

## Claims

1. A welding string (28) for forming transverse welding seams in a sheet of film (F) that comprises at least one layer of film, said sheet of film (F) being moved continuously through a welding unit, and wherein pairs of welding strings (28) are moved in a curve at respective sides of the sheet of film (F) by means of movement means arranged at each rim of the sheet of film (F), whereby the welding strings (28) will, along a part of the curve, extend parallel with the sheet of film (F) and at the same speed rate as the film (F), and wherein at least the one welding string (28) comprises a heater element and means configured for urging the welding string against the sheet of film (F) on respective sides thereof with a certain force, **characterised in that** the welding string (28) comprises a welding body (35) in the form of a thin-walled, hollow metal profile, wherein the heater element is arranged interiorly of said profile, and that the welding body (35) is supported by a rigid carrier beam (30,31) being mounted to the movement means in order to transmit the curve movement to the welding body (35), and that - in the longitudinal direction of the welding string - the support of the welding body (35) comprises spring elements (42,50) between the welding body (35) and the carrier beam (30), and attachment elements (10,39) that are adjustable and distributed in the longitudinal direction of the welding string (28) and configured to hold the welding body (35) at a selected maximum distance from the carrier beam (30) against the spring force of the spring elements (42,50).

2. A welding string according to claim 1, **characterised in that** the welding body (35) comprises an extruded profile of light metal, preferably an aluminium profile.

3. A welding string according to claim 1 and 2, **characterised in that** the carrier beam (30,31) comprises a flexurally rigid U-profile (30) with a bottom (30a) and two legs (30b), and that the welding body (35) comprises both an abutment face (37) that faces away from the sheet of film (F) and lateral faces (38), wherein the welding body (35) is situated between the two legs (30b) of the U-profile, and wherein the spring elements (42,50) in the form of pressure springs cooperate with the attachment elements (10,46) to act between the abutment face (37) of the welding body (35) that faces away from the sheet of film (F) and the bottom (30a) of the U-profile.

4. A welding string according to claim 2, **characterised in that** the side of the body (35) that faces towards the sheet of film (F) is configured with a bead (36) having a flat top face, wherein - at least on that flat top face - a surface coating of Teflon is provided.

5. A welding string according to claims 1 through 3, **characterised in that** said pressure springs (50) comprise a silicon block (50) arranged at the bottom (30a) of the U-profile (30), and a support portion (51) secured against said silicon block (50) having an abutment face, wherein the abutment face (37) of the welding body (35) that faces away form the film rests against the abutment face of the support part, and the adjustable attachment means comprise bolt and/or screw connections (46) at the rim portions of the U-profile between the bottom (30a) of the U-profile and the lateral faces (38) of the welding body.

6. A welding string according to claim 5, **characterised in that**, between the legs (30b) of the U-profile and the lateral faces (38) of the welding body, safety blocks (39) are provided that rest against a flange that protrudes along the abutment face (37) of the welding body, wherein safety blocks (39) have holes with internal threads in the transverse direction of the U-profile, opposite which holes the legs (30b) of the U-profile are provided with corresponding holes, in which screws (47) are fastened for tightening of the safety blocks (39) at a given height relative to the bottom (30a) of the U-profile.

7. A welding string according to claims 1 through 3, **characterised in that** said pressure spring is constituted of screw or disc springs (42), and that the adjustable pull elements comprise bolts (10) that are solidly attached to the abutment face (37) of the welding body that faces away from the film and that have been conveyed through holes in the bottom (30a) of the U-profile, and wherein the bolts on the back of the U-profile (31) have adjustment nuts (44) configured for adjusting the height of the welding body (35) relative to the U-profile (30).

8. A welding string according to claims 1 through 7, **characterised in that** the welding body has two separate cavities for receiving heater elements, and wherein a bead (36) as described is arranged above each cavity.

9. A welding string according to claim 1, **characterised in that** an electrical wire connection is provided between a centrally arranged pull ring device (13) and the heater elements of the welding string through a wire connection (13a,13b) comprising a first articulated part (13a) connected to the pull ring device (13), and a second articulated part (13b) which is pivotally connected to the first articulated part and the carrier beam (30,31), respectively, to which articulation (13a,13b) electrical wires are fastened.

10. A welding string according to claim 1, **characterised in that** the connection between the carrier beam (30,31) and the movement element (27) is established in a plane that passes approximately between the centre of mass of the welding string (28), and that - at least along that part of the curve where the welding is effected - each film rim is provided with guide faces (S) against which a curve follower (15) that is solidly connected to the welding string slides and/or rolls.

## Patentansprüche

1. Schweißstrang (28) zum Bilden von Querschweißnähten in einer Folienlage (F), die mindestens eine Folienschicht umfasst, wobei die Folienlage (F) kontinuierlich durch eine Schweißeinheit bewegt wird, und wobei Paare von Schweißsträngen (28) auf respektiven Seiten der Folienlage (F) mittels Bewegungseinrichtungen, die an jedem Rand der Folienlage (F) angeordnet sind, in einer Kurve bewegt werden, wodurch sich die Schweißstränge (28) entlang einem Teil der Kurve parallel zur Folienlage (F) und mit derselben Geschwindigkeitsrate wie die Folie (F) erstrecken, und wobei mindestens der eine Schweißstrang (28) ein Heizelement umfasst sowie Einrichtungen, die konfiguriert sind, um den Schweißstrang gegen die Folienlage (F) auf ihren respektiven Seiten mit einer gewissen Kraft zu drängen, **dadurch gekennzeichnet, dass** der Schweißstrang (28) einen Schweißkörper (35) in Form eines dünnwandigen Metallhohlprofils umfasst, wobei das Heizelement im Innern des Profils angeordnet ist, und dass der Schweißkörper (35) durch eine steife Trägerschiene (30, 31) getragen wird, die an den Bewegungseinrichtungen montiert ist, um die Kurvenbewegung auf den Schweißkörper (35) zu übertragen, und dass - in der Längsrichtung des Schweißstrangs - die Halterung des Schweißkörpers (35) Federelemente (42, 50) zwischen dem Schweißkörper (35) und der Trägerschiene (30) umfasst sowie Anbringelemente (10, 39), die einstellbar und in der Längsrichtung des Schweißstrangs (28) verteilt und so konfiguriert sind, dass sie den Schweißkörper (35) in einem ausgewählten maximalen Abstand von der Trägerschiene (30) gegen die Federkraft der Federelemente (42, 50) halten.

2. Schweißstrang nach Anspruch 1, **dadurch gekennzeichnet, dass** der Schweißkörper (35) ein Strangpressprofil von Leichtmetall, vorzugsweise ein Aluminiumprofil, umfasst.

3. Schweißstrang nach Anspruch 1 und 2, **dadurch gekennzeichnet, dass** die Trägerschiene (30, 31) ein biegesteifes U-Profil (30) mit einem Boden (30a) und zwei Schenkeln (30b) umfasst und dass der Schweißkörper (35) sowohl eine Anschlagflache (37), die von der Folienlage (F) abgewandt ist, und seitliche Flächen (38) umfasst, wobei sich der Schweißkörper (35) zwischen den zwei Schenkeln (30b) des U-Profils befindet und wobei die Federelemente (42, 50) in Form von Druckfedern mit den Anbringelementen (10, 46) zusammenwirken, um zwischen der Anschlagfläche (37) des Schweißkörpers (35), die von der Folienlage (F) abgewandt ist, und dem Boden (30a) des U-Profils zu wirken.

4. Sehweißstrang nach Anspruch 2, **dadurch gekennzeichnet, dass** die Seite des Körpers (35), die in Richtung auf die Folienlage (F) gewandt ist, mit einem Wulst (36) mit einer ebenen oberen Fläche konfiguriert ist, wobei - mindestens auf dieser ebenen oberen Fläche - eine oberflächenschicht von Teflon vorgesehen ist.

5. Schweißstrang nach den Ansprüchen 1 bis 3, **dadurch gekennzeichnet, dass** die Druckfedern (50) einen Silikonblock (50), der am Boden (30a) des U-Profils (30) angeordnet ist, und einen Halterungsteil (51), der gegen den Silikonblock (50) gesichert ist, mit einer Anschlagfläche umfassen, wobei die Anschlagfläche (37) des Schweißkörpers (35), die von der Folie abgewandt ist, gegen die Anschlagfläche des Halterungsteils anliegt, und die einstellbaren Anbringeinrichtungen Bolzen- und/oder Schraubverbindungen (46) an den Randteilen des U-Profils zwischen dem Boden (30a) des U-Profils und den seitlichen Flächen (38) des Schweißkörpers umfassen.

6. Schweißstrang nach Anspruch 5, **dadurch gekennzeichnet, dass** zwischen den Schenkeln (30b) des U-Profils und den seitlichen Flächen (38) des Schweißkörpers Sicherungsblöcke (39) vorgesehen sind, die gegen einen Flansch anliegen, der entlang der Anschlagfläche (37) des Schweißkörpers vorsteht, wobei Sicherungsblöcke (39) Löcher mit Innengewinden in Querrichtung des U-Profils aufweisen, entgegengesetzt zu welchen Löchern die Schenkel (30b) des U-Profils mit entsprechenden Löchern versehen sind, in denen Schrauben (47) zum Festziehen der Sicherungsblöcke (39) in einer vorgegebenen Höhe in Bezug zum Boden (30a) des U-Profils befestigt sind.

7. Schweißstrang nach den Ansprüchen 1 bis 3, **dadurch gekennzeichnet, dass** die Druckfeder aus Schrauben- oder Tellerfedern (42) gebildet ist und dass die einstellbaren Zugelemente Bolzen (10) umfassen, die an der Anschlagfläche (37) des Schweißkörpers, die von der Folie abgewandt ist, fest angebracht sind und die durch Löcher im Boden (30a) des U-Profils hindurchgeführt worden sind, und wobei die Bolzen auf der Rückseite des U-Profils (31) Einstellmuttern (44) aufweisen, die zum Einstellen der Höhe des Schweißkörpers (35) in Bezug zum U-Profil (30) konfiguriert sind.

8. Schweißstrang nach den Ansprüchen 1 bis 7, **dadurch gekennzeichnet, dass** der Schweißkörper zwei getrennte Hohlraume zur Aufnahme von Heizelementen aufweist und wobei ein Wulst (36) wie beschrieben über jedem Hohlraum angeordnet ist.

9. Schweißstrang nach Anspruch 1, **dadurch gekennzeichnet, dass** eine elektrische Drahtverbindung zwischen einer mittig angeordneten Zugringvorrichtung (13) und den Heizelementen des Schweißstrangs durch eine Drahtverbindung (13a, 13b) vorgesehen ist, umfassend: einen ersten Gelenkteil (13a), der mit der Zugringvorrichtung (13) verbunden ist, und einen zweiten Gelenkteil (13b), der mit dem ersten Gelenkteil bzw. der Trägerschiene (30, 31) schwenkbar verbunden ist, an welchem Gelenk (13a, 13b) elektrische Drähte befestigt sind.

10. Schweißstrang nach Anspruch 1, **dadurch gekennzeichnet, dass** die Verbindung zwischen der Trägerschiene (30, 31) und dem Bewegungselement (27) in einer Ebene erstellt ist, die etwa zwischen dem Massenschwerpunkt des Schweißstrangs (28) hindurchtritt, und dass - mindestens entlang demjenigen Teil der Kurve, wo das Schweißen bewerkstelligt wird - jeder Folienrand mit Führungsflächen (S) versehen ist, gegen die ein Kurvenfolger (15), der mit dem Schweißstrang fest verbunden ist, gleitet und/oder rollt.

## Revendications

1. Tige de soudage (28) permettant de former des joints de soudure transversaux dans une feuille de film (F) qui comprend au moins une couche de film, ladite feuille de film (F) étant déplacée continuellement à travers une unité de soudure, et dans laquelle des paires de tiges de soudage (28) sont déplacées en une courbe au niveau des côtés respectifs de la feuille du film (F) au moyen d'un moyen de déplacement disposé à chaque rebord de la feuille de film (F), moyennant quoi les tiges de soudage (F) s'étendront, le long d'une partie de la courbe, parallèlement à la feuille de film (F) et à la même vitesse que le film (F), et dans laquelle au moins une tige de soudage (28) comprend un élément de chauffage et un moyen configuré pour pousser la tige de soudage contre la feuille de film (F) sur ses côtés respectifs avec une certaine force, **caractérisée en ce que** la tige de soudage (28) comprend un corps de soudage (35) sous forme de profilé métallique creux à paroi mince, l'élément de chauffage étant disposé à l'intérieur dudit profilé, et **en ce que** le corps de soudage (35) est supporté par une poutre de support rigide (30, 31) qui est montée sur le moyen de déplacement afin de transmettre le déplacement en courbe au corps de soudage (35), et **en ce que** - dans la direction longitudinale de la tige de soudage - le support du corps de soudage (35) comprend des éléments de ressort (42, 50) situés entre le corps de soudage (35) et la poutre de support (30), et des éléments de fixation (10, 39) qui sont ajustables et répartis dans la direction longitudinale de la tige de soudage (28) et configurés pour maintenir le corps de soudage (35) à une distance maximale sélectionnée depuis la poutre de support (30) contre la force de ressort des éléments de ressort (42, 50).

2. Tige de soudage selon la revendication 1, **caractérisée en ce que** le corps de soudage (35) comprend un profilé extrudé d'un métal léger, de préférence un profilé d'aluminium.

3. Tige de soudage selon les revendications 1 et 2, **caractérisée en ce que** la poutre de support (30, 31) comprend un profilé en U rigide de manière flexible (30) avec un fond (30a) et deux membres (30b) et **en ce que** le corps de soudage (35) comprend à la fois une face de butée (37) qui est en regard de la feuille de film (F) et des faces latérales (38), le corps de soudage (35) étant situé entre les deux membres (30b) du profilé en U, et les éléments de ressort (42, 50) sous forme de ressorts de pression coopérant avec les éléments de fixation (10, 46) pour agir entre la face de butée (37) du corps de soudage (35) qui est en regard de la feuille de film (F) et le fond (30a) du profilé en U.

4. Tige de soudage selon la revendication 2, **caractérisée en ce que** le côté du corps (35) qui est en regard de la feuille de film (F) est configuré avec une moulure (36) ayant une face supérieure plate, dans laquelle - au moins sur cette face supérieure plate - un revêtement en surface de Téflon est disposé.

5. Tige de soudage selon les revendications 1 à 3, **caractérisée en ce que** lesdits ressorts de pression (50) comprennent un bloc de silicium (50) disposé au fond (30a) du profilé en U (30), et une partie de support (51) fixée sur ledit bloc de silicium (50) ayant une face de butée, dans laquelle la face de butée (37) du corps de soudage (35) qui est en regard du film demeure contre la face de butée de la partie de support, et les moyens de fixation ajustables comprennent des connexions de boulons et/ou de vis (46) au niveau des parties de rebord du profilé en U entre le fond (30a) du profilé en U et des faces latérales (38) du corps de soudage.

6. Tige de soudage selon la revendication 5, **caractérisée en ce que**, entre les membres (30b) du profilé en U et des faces latérales (38) du corps de soudage, les blocs de sécurité (39) sont prévus qui demeurent contre un bord qui dépasse le long de la face de butée (37) du corps de soudage, dans laquelle les blocs de sécurité (39) ont des trous avec des filets internes dans la direction transversale du profilé en U, en face desquels trous les membres (30b) du profilé en U sont munis de trous correspondants, dans lesquels les vis (47) sont fixées pour serrer les blocs de sécurité (39) à une hauteur donnée par rapport au fond (30a) du profilé en U.

7. Tige de soudage selon les revendications 1 à 3, **caractérisée en ce que** ledit ressort de pression est constitué de ressorts à vis ou à disque (42), et **en ce que** les éléments de tirage ajustables comprennent des boulons (10) qui sont fixés solidement à la face de butée (37) du corps de soudage qui est en regard du film et **en ce qu'**ils ont été transportés à travers des trous dans le fond (30a) du profilé en U, et dans laquelle les boulons sur l'arrière du profilé en U (31) ont des écrous d'ajustement (44) configurés pour ajuster la hauteur du corps de soudage (35) par rapport au profilé en U (30).

8. Tige de soudage selon les revendications 1 à 7, **caractérisée en ce que** le corps de soudage comporte deux cavités séparées pour recevoir des éléments de chauffage, et dans laquelle une moulure (36) telle que décrite ci-dessus est disposée au-dessus de chaque cavité.

9. Tige de soudage selon la revendication 1, **caractérisée en ce qu'**une connexion par fil électrique est disposée entre un dispositif d'anneau de tirage (13) disposé au centre et des éléments de chauffage de la tige de soudage à travers une connexion par fil (13a, 13b) comprenant une première partie articulée (13a) connectée au dispositif d'anneau de tirage (13), et une seconde partie articulée (13b) qui est connectée en pivot à la première partie articulée et à la poutre de support (30, 31), respectivement, à laquelle articulation (13a, 13b) des fils électriques sont fixés.

10. Tige de soudage selon la revendication 1, **caractérisée en ce que** la connexion entre la poutre de support (30, 31) et l'élément de déplacement (27) est établie dans un plan qui passe approximativement entre le centre de la masse de la tige de soudage (28), et **en ce que** - au moins le long de cette partie de la courbe où le soudage est effectué - chaque rebord de film est muni de faces de guidage (S) contre lesquelles un suiveur de courbe (15) qui est connecté solidement à la tige de soudage coulisse et/ou roule.
